# EUROPEAN PATENT SPECIFICATION

(11) **EP 2 800 679 B1**
(45) Date of publication and mention of the grant of the patent: **11.04.2018**
(21) Application number: 12813583.7
(22) Date of filing: 28.11.2012
(51) Int. Cl.: B60R 19/18, F16F 7/12

(54) **MULTI-STAGE ENERGY ABSORBER AND METHOD OF MAKING AND USING THE SAME**
MEHRSTUFIGE STROMABSORPTIONSVORRICHTUNG SOWIE VERFAHREN ZU IHRER HERSTELLUNG UND VERWENDUNG
ABSORBEUR D'ÉNERGIE À PLUSIEURS NIVEAUX ET SON PROCÉDÉ DE FABRICATION ET D'UTILISATION

(30) Priority: 05.01.2012 US 201213343889
(43) Date of publication of application: 12.11.2014
(73) Proprietor: SABIC Global Technologies B.V., 4612 PX Bergen op Zoom (NL)
(72) Inventor: KUMAR, Subramanian, Muthu, Karnataka Bangalore 560016 (IN); MANA, Dinesh, Kundanahalli Bangalore 560066 (IN); TREMBLAY, Gregory, Everett, Adams, Massachusetts 01220 (US)
(74) Representative: Stiebe, Lars Magnus
(86) International application number: PCT/US2012/066696
(87) International publication number: WO 2013/103454

(56) References cited:
- FR-A1- 2 870 802
- US-A1- 2005 230 205
- US-A1- 2011 006 554

## Description

### TECHNICAL FIELD

The present disclosure relates generally to multi-stage energy absorbers for use in a vehicle, for example, to reduce injuries (e.g., to occupant(s), pedestrian(s), etc.) and/or to reduce vehicle damage and/or to improve the overall efficiency of the multi-stage energy absorber.

### BACKGROUND

In the current competitive automotive market, one of the biggest challenges for a design engineer for pedestrian safety is to reduce the system cost while controlling the knee bending in a minimum packaging space with aggressive styling of vehicle fronts. At present, original equipment manufacturers (OEMs) are very aggressive regarding lower bumper system mass, as the system includes at least two components, an upper energy absorber and a lower leg support.

Plastic or metal single-stage energy absorbers can be filled with foam (e.g., foam blocks) for energy absorption, but this generally is not an efficient method because the energy absorption is not constant during the energy absorbing event. Additionally, because of the relatively soft nature of the foam, it can be difficult to achieve the desired force levels in the initial displacement phase. Filling an energy absorber with foam can be challenging to manufacture because two different materials are used in the same design. Additionally, the manufacturing cost associated with foaming inside the surrounding walls or cutting the foam blocks to match the shape of the energy absorber walls is higher compared to injection molded energy absorbers. An insert (e.g., metal or composite) can be used in energy absorbers in the portion of the walls prone to buckling to improve efficiency where plastic is thereafter overmolded on the walls. Problems can arise during manufacturing, however, because of the bi-material combination and another drawback to this design is the relatively high cost of the composite materials as compared to plastic or metal.

Document US 2011/006554 A1 (Mani Ayyakannu) discloses a safety automobile bumper assembly which includes energy absorbers, according to the preamble of claims 1 and 10, interposed between a fascia and a bumper beam. It comprises a strip of deformable material formed with a loop with opposite curved ends deformed by relative movement of the fascia and bumper beam in an impact. Additional curved strip positions are provided by one or more additional loops or by one or more inner webs to increase energy absorbing capacity.

This generates the need to design an energy absorber that will deform and absorb impact energy to ensure a good vehicle safety rating, while meeting lower leg impact ratings and, desirably, with a decreased weight and lower amount of packaging space after an impact, resulting in lower cost, increased design freedom, and improved efficiency. Therefore, the automotive industry is continually seeking economic solutions that meet global technical regulations for pedestrian safety and/or vehicle damageability and/or efficiency.

### BRIEF DESCRIPTION

Disclosed, in various embodiments, are multi-stage energy absorbers, and methods for making and using the same.

In one embodiment, a multi-stage energy absorbing system comprises the features of claim 1.

In an embodiment, a method of making a multi-stage energy absorbing system comprises the features of claim 10.

These and other features and characteristics are more particularly described below.

### BRIEF DESCRIPTION OF THE DRAWINGS

The following is a brief description of the drawings wherein like elements are numbered alike and which are presented for the purposes of illustrating the exemplary embodiments disclosed herein and not for the purposes of limiting the same.
FIG. 1 is an isometric, perspective view of an embodiment of a multi-stage energy absorber.
FIG. 2 is an isometric, perspective view of another embodiment of a multi-stage energy absorber.
FIG. 3 is an isometric, perspective view of an embodiment of a multi-stage energy absorbing system.
FIG. 4 is an isometric, perspective view of an embodiment of a multi-stage energy absorbing system employing the energy absorber of FIG. 2.
FIG. 5 is a top view of the crushing of the multi-stage energy absorbing system of FIG. 3.
FIG. 6 is a perspective view of a single-stage energy absorber.
FIG. 7 is a graphical illustration of the force versus displacement of the single-stage energy absorber of FIG. 6 and the multi-stage energy absorbing system of FIG. 3.
FIG. 8 is a graphical illustration of the energy absorbed versus the displacement of the single-stage energy absorber of FIG. 6 and the multi-stage energy absorbing system of FIG. 3.
FIG. 9 is a cross-sectional side view of the single-stage energy absorber of FIG. 6 during pedestrian lower leg impact testing.
FIG. 10 is a top view of the multi-stage energy absorbing system of FIG. 3 during pedestrian lower leg impact testing.
FIG. 11 is a graphical illustration of the knee acceleration versus displacement of the single-stage energy absorber of FIG. 6 and the multi-stage energy absorbing system of FIG. 3.

### DETAILED DESCRIPTION

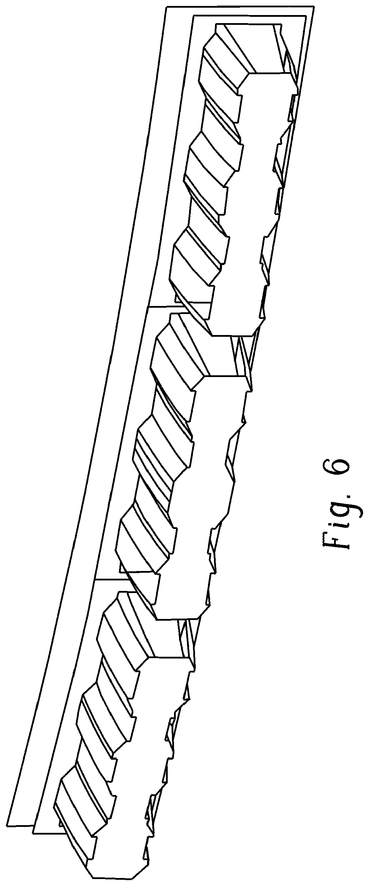

Disclosed herein, in various embodiments, are energy absorber designs for automotive bumpers for pedestrian safety and/or vehicle damagebility and/or efficiency. The energy absorbing system comprising a plurality of energy absorbers disclosed herein offers multiple-stage (multi-stage) energy absorption during an impact with improved efficiency. Efficiency of an energy absorbing system generally refers to the ability of the energy absorbers to maintain a relatively constant level of energy absorption during the impact. Generally, single-stage energy absorbers have an initial rate of energy absorption that decreases significantly after an initial impact. This can lead to increased damage to a pedestrian and/or to increased vehicle damage. The multi-stage energy absorbers disclosed herein can comprise a single piece molded article that absorbs energy in multiple stages, improves the efficiency of the energy absorber, and does not increase the packing space of the energy absorber. For example, the multi-stage energy absorbers disclosed herein can provide a greater than or equal to 50% improvement in energy absorption versus a single-stage energy absorber designed for the same packaging space (e.g., 50 millimeters (mm)), specifically, greater than or equal to 60%, and even more specifically, greater than or equal to 70%. As described herein, single stage energy absorber generally refers to a single stage energy absorber with a "C" cross section as illustrated in Figure 6.

Increased importance has been placed on methods for minimizing the amount of injury suffered by a person in an accident as well as the amount of vehicle damage. Different regulatory committees assess automotive pedestrian and occupant impact performance globally. Depending on the overall performance, vehicles are assigned a cumulative safety rating. Each and every component of the vehicle needs to satisfy the specific impact criteria in order to ensure a good overall rating for the vehicle. Increasing the efficiency of an energy absorber can help improve the overall safety rating of a vehicle.

Plastic or metal single-stage energy absorbers can be formed using curved or straight walls aligned normal to the impact direction for energy absorption. However, maintaining the force levels to the desired values can be difficult because the walls begin to buckle after the initial impact and the next impact crushes the energy absorber completely.

Dual stage energy absorbers generally comprise a first stage and a second stage where the first stage comprises softer walls that crush and absorb energy for low speed impacts. The second stage is relatively stiff and will absorb energy during high speed impacts. Thus, dual stage energy absorbers are concerned with the problem of two-level energy absorption rather than trying to improve the efficiency of energy absorption.

The multi-stage energy absorbing system can comprise a plurality of energy absorbers (e.g., crush lobes) having multiple energy absorbing elements (e.g., walls) which allow for multiple zones of energy absorption and which can be tuned (e.g., by changing materials, wall thickness, design, etc.) to absorb a desired amount of energy depending upon the energy levels involved. Generally, the energy absorbers are connected to a base, where the energy absorbers and the base compose the energy absorbing system, which is configured to be connected to a bumper beam. On the opposite side of the energy absorbers is typically a fascia or decorative piece covering the energy absorbers and the bumper beam. The bumper beam is configured to be connected to the vehicle frame (i.e., body in white).

In one embodiment, the plurality of the energy absorbing elements can be arranged in such a way that a first pair (e.g., an outermost pair) of sidewalls is the first to be impacted. As the first pair of sidewalls absorbs energy (e.g., buckles, crushes, bends, etc.) and folds, a second pair (e.g., inner pair) of sidewalls nested within the first pair of sidewalls is exposed to the force from the impact and begins to absorb energy. As the second pair of sidewalls folds, a third pair of sidewalls located within the second pair of sidewalls is exposed to the force and begins to absorb energy, and so forth. In other words, a plurality of energy absorbing elements, each individually comprising pairs of sidewalls and a connecting wall, are nested within each other such that sidewalls of subsequent adjacent (i.e., nearest in space or position) elements are shorter, and the connecting wall is shorter, creating a space between adjacent sidewalls and adjacent connecting walls. The multi-stage energy absorbers disclosed herein can absorb significantly higher amounts of energy at the same displacement as a single-stage energy absorber and/or can also significantly reduce the distance an impactor moves during impact over the same amount of energy compared to a single-stage energy absorber. This can be significant if the impactor is a pedestrian, since moving less distance can mean less injuries suffered by a pedestrian in an impact.

The multi-stage energy absorbers disclosed herein can be effective in absorbing energy in both low speed and high speed impacts. The multi-stage energy absorbers can be used in a multitude of energy absorbing applications including, but not limited to, exterior energy absorption applications such as pedestrian safe energy absorbers and energy absorbers for vehicle damageability requirements, interior energy absorption applications such as door energy absorbers, roof energy absorbers, and knee bolsters. The multi-stage energy absorbers can also be used in applications where it is desired for the force levels to be as constant as possible for a larger displacement such as aerospace, defense, industrial machines, marine, nuclear, rail, etc.

Exemplary characteristics of the energy absorbers include high toughness/ductility, thermal stability (e.g., -30°C to 60°C), high energy absorption capacity, a good modulus-to-elongation ratio, and recyclability, among others, wherein "high" and "good" are intended to mean that the characteristic at least meets current vehicle safety regulations and requirements for the given component/element. The energy absorber can comprise any thermoplastic material or combination of thermoplastic materials that can be formed into the desired shape and provide the desired properties. Exemplary materials include thermoplastic materials as well as combinations of thermoplastic materials with elastomeric materials, and/or thermoset materials.

Possible thermoplastic materials include polybutylene terephthalate (PBT); acrylonitrile-butadiene-styrene (ABS); polycarbonate (LEXAN* and LEXAN* EXL resins, commercially available from SABIC Innovative Plastics); polycarbonate/PBT blends; polycarbonate/ABS blends; copolycarbonate-polyesters; acrylic-styrene-acrylonitrile (ASA); acrylonitrile-(ethylene-polypropylene diamine modified)-styrene (AES); phenylene ether resins; blends of polyphenylene ether/polyamide (NORYL GTX* resins, commercially available from SABIC Innovative Plastics); blends of polycarbonate/polyethylene terephthalate (PET)/PBT; polybutylene terephthalate and impact modifier (XENOY* resins, commercially available from SABIC Innovative Plastics); polyamides; phenylene sulfide resins; polyvinyl chloride PVC; high impact polystyrene (HIPS); low/high density polyethylene (L/HDPE); polypropylene (PP); expanded polypropylene (EPP); polyethylene and fiber composites; polypropylene and fiber composites (AZDEL Superlite* sheets, commercially available from Azdel, Inc.); long fiber reinforced thermoplastics (VERTON* resins, commercially available from SABIC Innovative Plastics)and thermoplastic olefins (TPO).

An exemplary filled resin is STAMAX* resin, which is a long glass fiber filled polypropylene resin also commercially available from SABIC Innovative Plastics. Some possible reinforcing materials include fibers, such as glass, carbon, and so forth, as well as combinations comprising at least one of the foregoing; e.g., long glass fibers and/or long carbon fiber reinforced resins. The energy absorber can also be formed from combinations comprising at least one of any of the above-described materials. For example, in some embodiments, the same material can be used to make each element of the energy absorber system (e.g. the sidewalls and the connecting walls). In other embodiment, different materials can be used to make the various elements of the energy absorber system (e.g., one material can be used to make the sidewalls and a different material can be used to make the connecting wall). It is contemplated that any combination of materials can be used to, e.g., enhance crush characteristics, reduce packaging space, etc.

A feature to consider when designing energy absorbers is the packaging space available for the energy absorbing assembly. Generally, the packaging space for the energy absorbing assembly after crushing should be as low as possible, for example, less than or equal to 5 mm, specifically, less than or equal to 2.5 mm, and more specifically, less than or equal to 2.0 mm. It is desirable for an energy absorber to occupy as little packaging space as possible for ergonomic and aesthetic purposes, among others. The multi-stage energy absorbers disclosed herein offer an improvement in packaging space after crushing with the efficient crushing of outer to inner sidewalls which fold upon one another to create an energy absorber with a small profile in the packaging space provided as compared to single-stage energy absorbers. It is understood that the packaging space requirements will vary depending on the type of vehicle in which the energy absorber is to be used. For example, a small, compact car will have a smaller packaging space than a large, sport utility vehicle. However, it is understood that the energy absorbers disclosed herein can offer the desired packaging space based upon the crushing behavior of the walls of the energy absorbers.

The overall size, e.g., the specific dimensions of the energy absorber will depend upon its location in the vehicle and its function, as well as the particular vehicle for which it is intended. For example, the length (*l*), height (*h*), and width (*w*) of the energy absorbing assembly, will depend upon the amount of space available in the desired location of use as well as the needed energy absorption. The depth and wall thickness of the energy absorber will also depend upon the available space, desired stiffness, and the materials (or combination of materials) employed. The depth "*d*" of the energy absorber (and hence the crush lobes), is generally bounded by the distance between the fascia and the bumper beam. For example, the wall thickness (*t*) of the various elements of the energy absorber (e.g., sidewall, connecting wall, transverse wall, etc.) can be less than or equal to 5.0 mm, specifically, 1.5 mm to 3.5 mm, more specifically, 0.5 mm to 1.5 mm, even more specifically 0.5 mm to 1.0 mm, yet more specifically, 0.6 mm to 0.9 mm, and still more specifically, 0.6 mm to 0.8 mm.

A more complete understanding of the components, processes, and apparatuses disclosed herein can be obtained by reference to the accompanying drawings. These figures (also referred to herein as "FIG.") are merely schematic representations based on convenience and the ease of demonstrating the present disclosure, and are, therefore, not intended to indicate relative size and dimensions of the devices or components thereof and/or to define or limit the scope of the exemplary embodiments. Although specific terms are used in the following description for the sake of clarity, these terms are intended to refer only to the particular structure of the embodiments selected for illustration in the drawings, and are not intended to define or limit the scope of the disclosure. In the drawings and the following description below, it is to be understood that like numeric designations refer to components of like function.

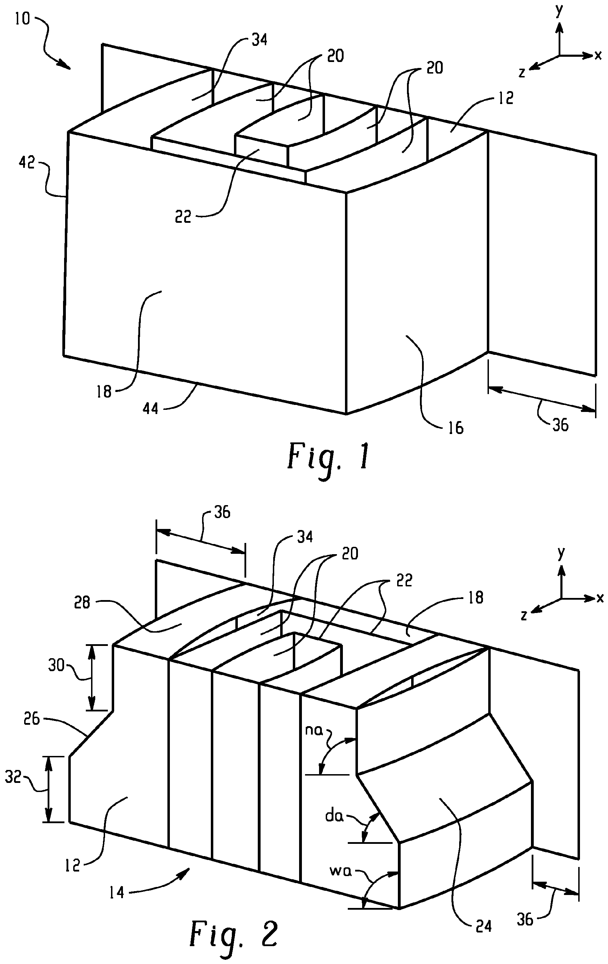

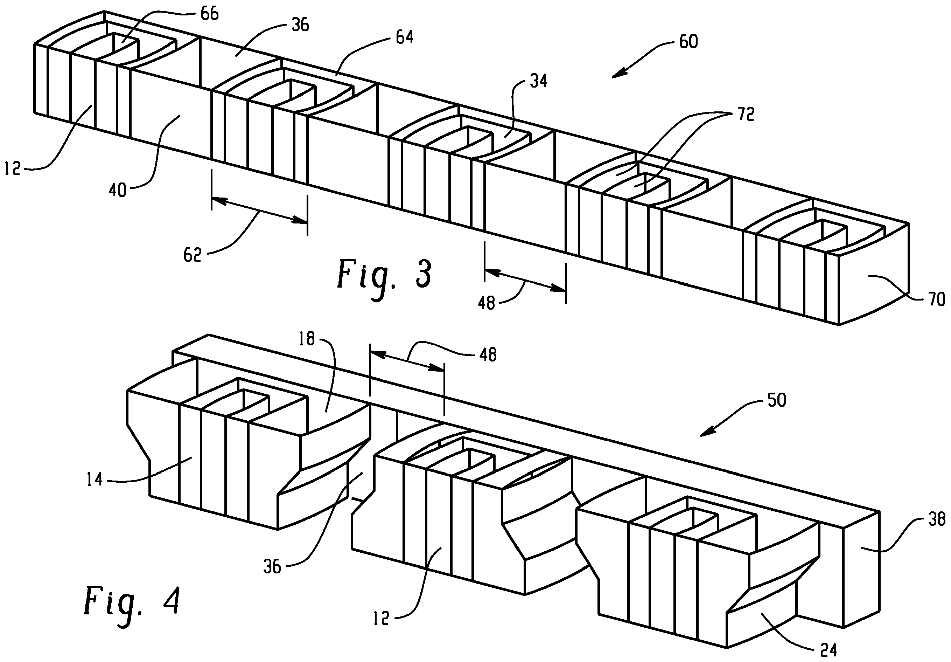

Turning now to Figures 1 to 4, various embodiments of energy absorbers and energy systems are illustrated. For example, in Figure 1 an energy absorber 10 (e.g., crush lobe) is illustrated. The energy absorber 10 can be configured to attach to a base 12, which can be attached to a bumper beam 38 (see e.g., Figure 4). The base 12 extends between outer sidewalls 16. Between adjacent energy absorbers 10, can be bumper beam flange 36 on a side of the energy absorber 10 that attaches to the bumper beam 38 (see e.g., Figure 4) and/or fascia flange 40 (see e.g., Figure 3) on a side of the energy absorber 10 that attaches to the fascia. The energy absorber 10 can comprise a plurality of pairs of sidewalls (outer sidewalls 16 and inner sidewalls 20) and a connecting wall 18, 22 that are nested within one another such that adjacent subsequent sidewalls and connecting walls are shorter (i.e., inner sidewall 20 is adjacent to outer sidewall 16, outer connecting wall 18 is adjacent to inner connecting wall 22, etc.), creating an open area 34 between adjacent sidewalls and adjacent connecting walls. For example, as is illustrated in Figure 1, the energy absorber 10 can comprise an outermost pair of sidewalls, outer sidewalls 16, an outermost connecting wall, outer connecting wall 18, an inner pair of sidewalls, inner sidewalls 20, and an inner connecting wall 22.

The number of pairs of inner sidewalls 20 and inner connecting walls 22 are not limited and can be any number that will provide the desired level of energy absorption. For example, there can be greater than or equal to one pair of inner sidewalls and one inner connecting wall, specifically, greater than or equal to two pairs of inner sidewalls and two inner connecting walls, more specifically, greater than or equal to three pairs of inner sidewalls and three connecting walls, even more specifically, greater than or equal to five pairs of inner sidewalls and five connecting walls, and still more specifically, greater than or equal to 10 pairs of inner sidewalls and 10 inner connecting walls.

In some embodiments, outer sidewalls 16 and/or inner sidewalls 20 can have a non-uniform thickness. For example, the thickness of the outer sidewalls 16 and/or inner sidewalls 20 can be increased on portions of the sidewall where it will collapse. Such a design can further increase the efficiency of the energy absorber 10 by allowing the outer sidewalls 16 and/or inner sidewalls 20 to absorb more energy before deforming and therefore, controlling some of the buckling of the energy absorber walls.

Figure 3 illustrates an embodiment of an energy absorbing system 60 employing the energy absorber 10 illustrated in Figure 1. In Figure 3, an energy absorbing system 60 can comprise a plurality of energy absorbers 62 having an outer connecting wall 64, which is connected on either or both sides to bumper beam flange 36, such that the combination of outer connecting wall 64 and bumper beam flange 36 extends across the length of the energy absorbing system 60 in the x direction. The outer connecting wall 64 can extend between outer sidewalls 70. The energy absorbers 62 can further comprise outer sidewalls 70 and inner sidewalls 72, as well as base 12, which is connected on either or both sides to fascia flange 40, such that the combination of base 12 and fascia flange 40 extends across the length of the energy absorbing system 60 in the x direction. As with the energy absorbers 10 illustrated in Figure 1, the sidewalls 70, 72 and connecting walls 64, 66 can be arranged in a nested arrangement such sidewalls of subsequent adjacent elements are shorter, and the connecting wall is shorter, creating an open area 34 between adjacent sidewalls and adjacent connecting walls. Open area 34 can extend through the energy absorber 62 to facilitate vertical mold movement when forming the energy absorbing system 60. Optionally, a transverse strip (see e.g., Figure 2) can be disposed over the open area 34 between the outer sidewall 16, 70 and an adjacent inner sidewall 20, 72 to provide further strength and rigidity to the energy absorber 10 or to the energy absorbing system 60.

There is no limit on the size of the open area of an energy absorber, although manufacturing limitations can effectively limit the size of the open area. Generally, the open area should be as small as possible to allow for a greater number of sidewalls in the energy absorber, and therefore, a greater number of stages of energy absorption. However, the packaging space and resulting stack up of the sidewalls should also be considered because a large number of walls will increase the packaging space after impact. In other words, the outer and inner sidewalls should desirably be positioned so that after an impact (i.e., crushing) they do not accumulate and have an undesirably high packing space. For example, the open area can be 5 mm to 30 mm, specifically, 10 mm to 25 mm, and more specifically, 15 mm to 20 mm.

As is also illustrated in Figure 3, there is a space 48 between adjacent energy absorbers 62. The space 48 between adjacent energy absorbers 62 can vary depending on the impact requirements for the energy absorbing system. For example, if the energy absorber is designed for pedestrian leg impact, the space between adjacent energy absorbers should desirably be less than or equal to the leg diameter, e.g., 132 mm whereas if the energy absorber is designed for rigid impact (e.g., with a rigid flat impactor), then the space can vary depending on the desired force and intrusion levels. For example, the space between adjacent energy absorbers in a multi-stage energy absorbing system can be 25 mm to 150 mm, specifically, 30 mm to 100 mm, and more specifically, 50 mm to 75 mm.

Any of the sidewalls described herein can have a shape that is straight, curved, parabolic, circular, cubic, brazier, bowed, corrugated, as well as combinations comprising at least one of the foregoing. Sidewalls can also, optionally, have a shape that has a narrow section and a wide section connected by a diverging section. Outer sidewalls and inner sidewalls can have the same, different, or alternating shapes. For example, outer sidewalls and inner sidewalls can have a bowed shaped; outer sidewalls can have a corrugated shape and inner sidewalls can have a bowed shape; outer sidewalls and inner sidewalls can have a corrugated shape, etc. In some embodiments, the outer sidewalls 16 and the inner sidewalls 20 can have a bowed shaped as illustrated in Figure 1, wherein the outer sidewalls 16 and the inner sidewalls 20 are generally parallel with one another. In other embodiments, as illustrated in Figure 2, the outer sidewalls 24 can have a varying shape with a wide section 32 and a narrow section 30 that are parallel to one another, with a non-parallel diverging section 26. Inner sidewalls 20 can be parallel with one another and also can be parallel with the wide section 32 and the narrow section 30 of the outer sidewalls 24.

Turning now to Figure 2, another embodiment of an energy absorber 14 attached to a base 12 is illustrated. Base 12 can extend between outer sidewalls 24. Outer connecting wall 18 can also extend between outer sidewalls 24, where bumper beam flange 36 extends between adjacent energy absorbers (see e.g., Figure 4). As illustrated in Figure 2, outer sidewalls 24 can, optionally, comprise a narrow section 30 and a wide section 32 with a diverging section 26 located between the narrow section 30 and the wide section 32 and/or outer sidewalls 24 can be parallel to inner sidewalls 20 (see outer sidewall 16 in Figure 1). The narrow section 30 has a narrow section angle, *nₐ*, the wide section 32 has a wide section angle, *wₐ*, that can be the same or different than the narrow section angle, and the diverging section 26 has a diverging section angle, *dₐ*, that is smaller than either the narrow section angle or the wide section angle, e.g., by less than or equal to 25%. The angles are measured with respect to the x axis as shown in Figure 2. For example, the diverging section angle, *dₐ*, can be less than 90°, specifically, less than or equal to 80°, more specifically, less than or equal to 75°, even more specifically, less than or equal to 60°, yet more specifically, less than or equal to 45°, and still more specifically, less than or equal to 40°. Stated another way, the outer sidewalls 24 in Figure 2 can have a first parallel section 30 and a second parallel section 32 connected by a diverging section 26.

As is also illustrated in Figure 2, a transverse strip 28 can be located over open area 34 between outer sidewalls 24 and inner sidewalls 20. The transverse strip 28 can provide additional stiffness and strength to the energy absorber 14 and can also act as a stabilizing wall for side and/or axial impacts. It is to be understood that the number of transverse strips is not limited and can generally be greater than or equal to two, specifically, greater than or equal to 4, more specifically, greater than or equal to 6, and even more specifically, greater than or equal to 10. Similarly with the outer sidewalls 16 and inner sidewalls 20, in some embodiments, the transverse strip 28 can have a non-uniform thickness. For example, the thickness of the transverse strip 28 can be increased on portions of the sidewall where it will collapse. Such a design can further increase the efficiency of the energy absorber 10 by allowing the transverse strip 28 to absorb more energy before deforming and therefore, controlling some of the buckling of the energy absorber walls.

Generally, the energy absorber 14 illustrated in Figure 2 as a result of the narrow section 30, wide section 32, and diverging section 26, can provide even greater energy absorption than the design illustrated in Figure 1. However, the outer sidewalls 16 in Figure 1 can be made thicker than outer sidewalls 24 in Figure 2 (e.g., greater than or equal to 5% thicker than outer sidewalls 24) to achieve the same energy absorption as outer sidewalls 24. The design illustrated in Figure 2 can provide the desired stiffness depending on the impact requirements for the energy absorber at a minimal thickness of outer sidewalls 24. For example, thickness values for the outer sidewalls 24 can be 0.5 mm to 5 mm. Specifically, the thickness of the outer sidewalls 24 can be 0.6 mm to 3.5 mm, more specifically, 0.75 mm to 3.0 mm, and even more specifically, 1.0 mm to 2.5 mm. For example, in some embodiments, the thickness of the outer sidewalls 24 can be less than or equal to 2.5 mm if injection molding is used to form the energy absorber, specifically, less than or equal to 2.0 mm, more specifically, less than or equal to 1.5 mm, and even more specifically, less than or equal to 1.2 mm. If injection compression molding is used to form the energy absorbers, thickness values for the outer sidewalls 24 can be less than or equal to 2.5 mm, specifically, less than or equal to 2.0 mm, more specifically, less than or equal to 1.75 mm, and even more specifically, less than or equal to 1.6 mm. In one embodiment, for the design illustrated in Figure 1, the minimal thickness for the outer sidewalls 16 and the inner sidewalls 20 can be less than or equal to 2.2 mm, e.g., for XENOY* plastic resin walls.

As described above, the plurality of energy absorbers, comprising pairs of sidewalls and a connecting wall, are nested within each other such that sidewalls of subsequent adjacent elements are shorter, and the connecting wall is shorter, creating a space (i.e., an open area 34) between adjacent sidewalls and adjacent connecting walls. It is understood that open area 34, in all embodiments, can extend through the energy absorber from an upper end 42 to a lower end 44 (see e.g., Figure 1), e.g., such that the energy absorber is open (i.e., not closed or covered on the upper end 42 or the lower end 44). Such a design allows for vertical mold movement, which allows the energy absorbers to be formed by injection molding or injection compression molding.

Turning now to Figure 4, a multi-stage energy absorbing system 50 can be formed with a plurality of energy absorbers 14 and bumper beam flanges 36 that in combination extends across a length of the bumper beam 38 in the x direction. In any embodiment, the number of energy absorbers 10, 14 present in the energy absorbing system is not limited and can be any number that will provide the desired energy absorption properties for the particular end use application. For example, there can be 1 to 10 energy absorbers dispersed across the length of the energy absorbing system. As previously discussed, the space 48 between adjacent energy absorbers can vary depending on the impact requirements for the energy absorbing system. For example, if the energy absorber is designed for pedestrian leg impact, the space 48 between adjacent energy absorbers should desirably be less than or equal to the leg diameter, e.g., 132 mm and if the energy absorber is designed for a rigid impact (e.g., with a rigid flat impactor), then the space can be varied depending on the desired force levels and intrusion levels. The plurality of energy absorbers 14 can be facing the same orientation or can be in alternating orientations, as illustrated in Figure 4. For example, the energy absorbers can be oriented such that the wide section 32 of a first energy absorber 14 is adjacent to the narrow section 30 of a second energy absorber 14 which is adjacent to the wide section 32 of a third energy absorber 14 and so on and so forth.

Generally, the multi-stage energy absorber can be formed by various molding techniques, such as injection molding, compression molding, extrusion blow molding, thermoforming, melt molding (e.g., co-extrusion, T-die extrusion, inflation extrusion, profile extrusion, extrusion coating, multilayer injection molding, etc.) and the like, depending upon the specific desired features of the multi-stage energy absorber and the capabilities of the molding method. In one embodiment, the energy absorber can be formed by extrusion (e.g., in embodiments where corrugations are not present, such as illustrated in Figure 1). In another embodiment, utilizing injection molding, the energy absorber can be formed by vertical mold movement as compared to horizontal mold movement where open areas can be created in the energy absorbers where the open area 34 extends through the energy absorber from an upper end 42 to a lower end 44 (e.g., with the design illustrated in Figure 2, the open area 34 extends from the narrow section 30 through the wide section 32). It can be challenging to mold an energy absorber in a vertical orientation, since molding is generally accomplished with the use of metal core pulls (e.g., unsupported standing steel) to form the inner sidewalls so that the inner sidewalls are formed within one another (e.g., a sidewall within a sidewall structure). The space located between the various walls of an energy absorber and the thickness of the various walls of the energy absorber can be dependent upon the manufacturing method used to form the energy absorber as previously discussed.

The energy absorber is further illustrated by the following non-limiting examples. It is noted that all of the examples were simulations unless specifically stated otherwise.

### EXAMPLES

### Example 1:

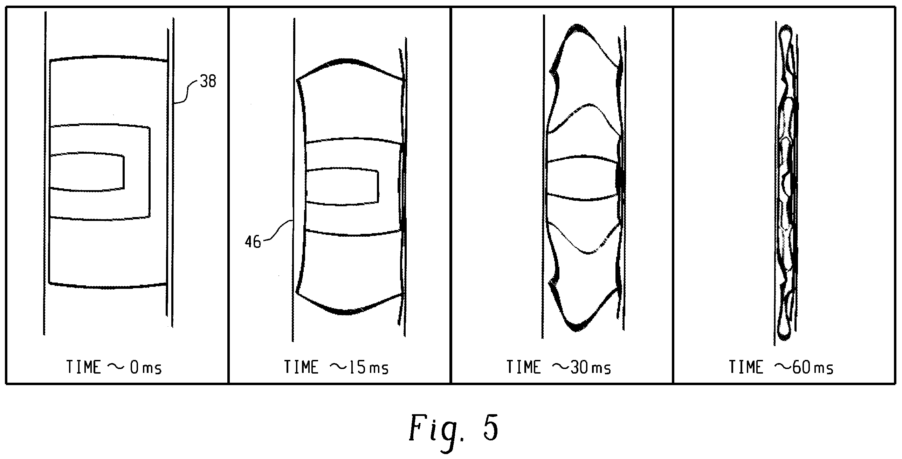

In the following simulations, to quantify the efficiency of the multi-stage energy absorbers disclosed herein and to compare their performance against single-stage energy absorbers, a rigid impactor is crashed against an energy absorber of a multi-stage energy absorbing system and a single-stage energy absorbing system. Both Sample 1 and Sample 2 have a uniform thickness of 2.5 mm and fit in a rectangular box having dimensions of 100 mm by 60 mm by 50 mm. A polycarbonate/polybutylene terephthalate resin (PC/PBT, e.g., XENOY*, commercially available from SABIC Innovative Plastics) was used for the material for the energy absorber and steel was used for the rigid support in Samples 1 and 2. In Sample 1, the crush behavior of a multi-stage energy absorber having the design of Figure 3 attached to a bumper beam 38 is shown in Figure 5. The impact occurs on the fascia side 46 of the multi-stage energy absorber. As can be seen from Figure 5, a multi-stage energy absorber functions where a pair of outer sidewalls and connecting wall collapse first and then pairs of inner sidewalls collapse so that after 60 milliseconds (ms), the multi-stage energy absorbing walls have collapsed evenly upon one another and the packing space of the multi-stage energy absorber is evenly dispersed across the crush lobe.

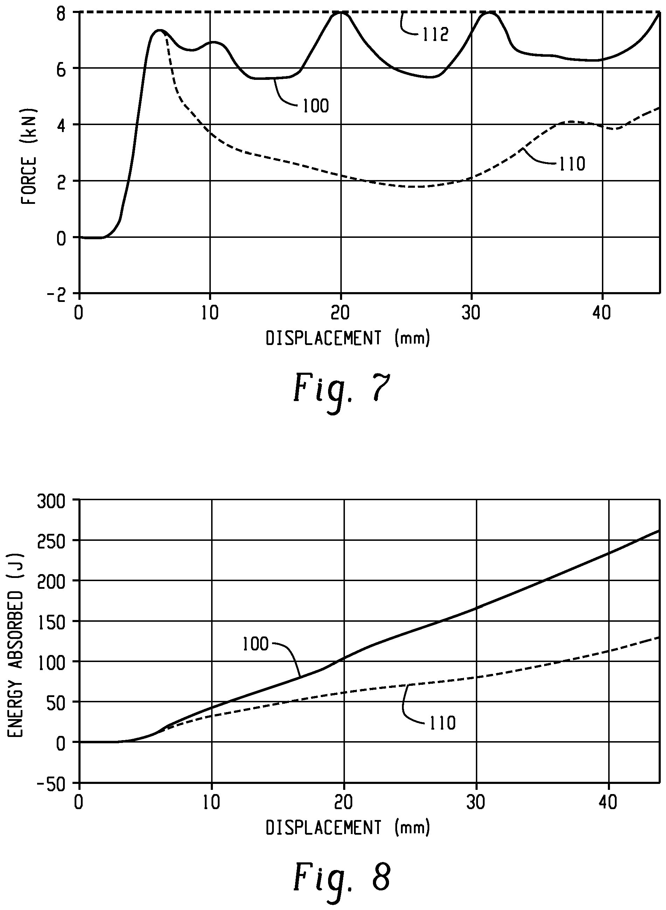

In Sample 2, the force versus displacement (e.g., intrusion) for a multi-stage energy absorber as illustrated in Figure 3 and a single-stage energy absorber as illustrated in Figure 6 are tested where force is measured in kiloNewtons (kN) and displacement is measured in mm. The results are illustrated in Figure 7 for a multi-stage energy absorber 100 versus a single-stage energy absorber 110. Generally, it is desirable for the force levels to remain as high as possible or as close to the desired force level 112 as possible throughout the test. As can be seen in Figure 7, the force level for the multi-stage energy absorber 100 is much higher and closer to the desired force level 112 than the single-stage energy absorber 110, indicating that higher efficiency is achieved with a multi-stage energy absorber. Also in Sample 2, the energy absorption, recorded in Joules, is measured compared to the displacement, recorded in mm and is illustrated in Figure 8. As can be seen in Figure 8, a multi-stage energy absorber 100 can absorb nearly double the energy of a single-stage energy absorber 110, likely due to the efficient energy absorbing capabilities of the multi-stage energy absorber 100.

### Example 2:

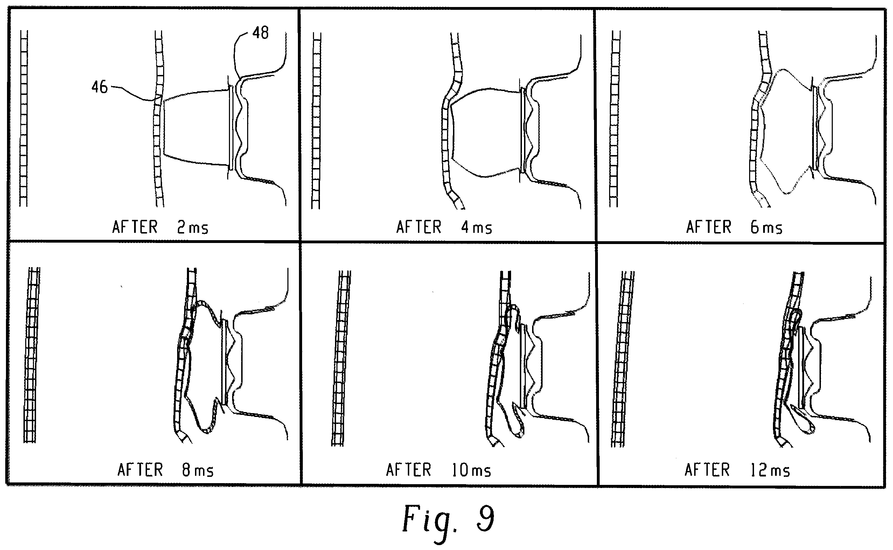

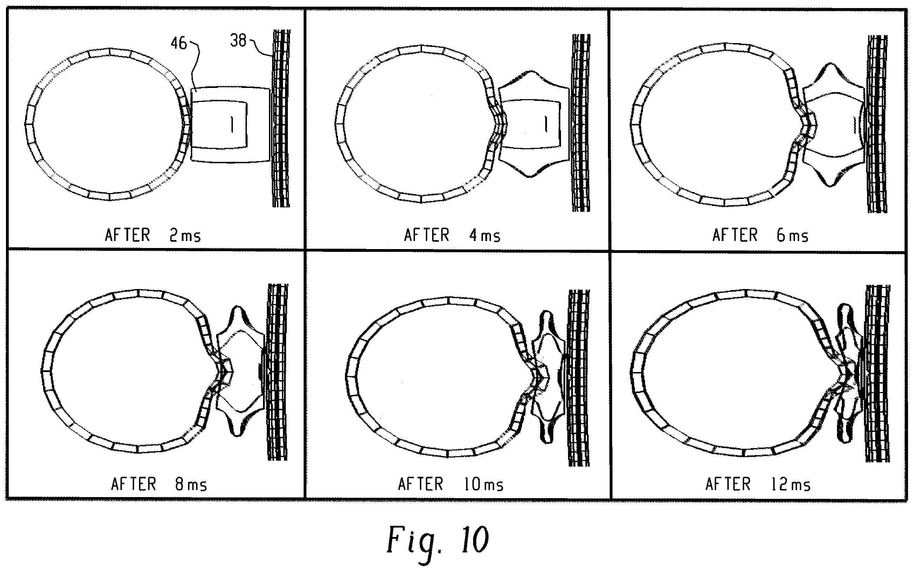

To quantify the efficiency of multi-stage energy absorbers for pedestrian impact performance, multi-stage energy absorbers having the design illustrated in Figure 3 are compared to single-stage energy absorbers having the design illustrated in Figure 6. In this test, a leg form is made to impact, with a speed of 40 kilometers per hour (km/hr), a vehicle with a packaging space of 50 mm. Both the single-stage energy absorber and the multi-stage energy absorber comprise PCT/PBT as described above. Seven individual multi-stage energy absorbers as illustrated in Figure 3 are arranged on a generic vehicle and are compared for lower-leg impact performance against the single-stage energy absorber as illustrated in Figure 6. The single-stage energy absorber and multi-stage energy absorber are separately mounted over the bumper beam 38, 48 to determine the impact performance of these designs. Impact occurs on the fascia side 46 of the energy absorbers. The results are illustrated in Figure 9 for the single-stage energy absorber and in Figure 10 for the multi-stage energy absorber. Crush behavior at varying instances of time for an impact at the center of a bumper beam to which the energy absorbers are attached using single-stage energy absorbers (see Figure 9) and multi-stage energy absorbers (see Figure 10) are shown. As illustrated in Figures 9 and 10, the multi-stage energy absorber has a more evenly dispersed crushing than the single-stage energy absorber.

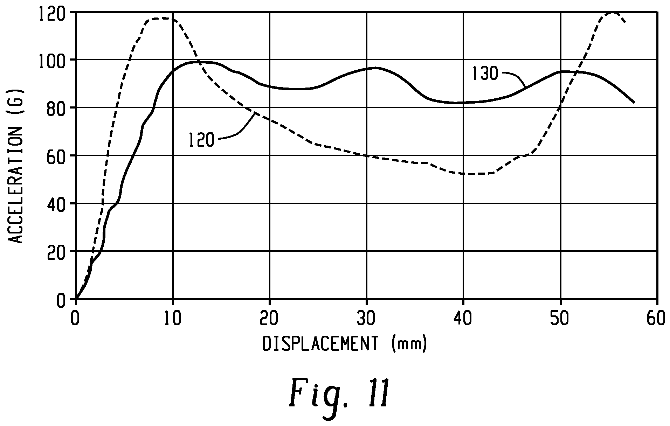

The acceleration measured at the knee location for both a multi-stage energy absorber with the design illustrated in Figure 3 and a single-stage energy absorber with the design illustrated in Figure 6 are also compared for the same packaging space, which is 50 mm. According to the European Enhanced Vehicle-Safety Committee (EEVC) Working Group 17 Pedestrian Safety report, the maximum lateral tibia acceleration should be less than or equal to 150 Gs, where G refers to the gravitational acceleration. In this example, the single-stage energy absorber generates 120 Gs, while the multi-stage energy absorber generates only 98 Gs for the same packaging space, illustrating that the multi-stage energy absorber provides more flexibility and an increased safety margin. As illustrated in Figure 11, the single-stage energy absorber 120 is observed to generate 20% higher acceleration as compared to the multi-stage energy absorber 130 without significant increase in mass (e.g., the mass of both energy absorbers are observed to be close to 0.5 kilograms (kg)). The multi-stage energy absorber 130 has a more constant, and thus, more efficient acceleration.

### Example 3:

Mold flow simulations are also conducted to ascertain the feasibility of injection molding a complete energy absorbing unit with a single gate. The filling time and injection pressure are observed to be within achievable limits and the number of gates and the position of the gates can be changed to improve the manufacturability. The filling time and number of gates will depend upon the end use application and desired cost for the molding cycle to form the energy absorbers. Generally, the filling time is less than or equal to 10 seconds and the number of gates is less than or equal to 5.

In one embodiment, a multi-stage energy absorbing system comprises: a base; and a plurality of energy absorbers, , wherein each energy absorber individually comprises energy absorbing elements in a nested arrangement, wherein the energy absorbing elements comprise a pair of sidewalls and a connecting wall, wherein the sidewalls and the connecting wall of subsequent, adjacent energy absorbing elements are shorter creating a space between adjacent sidewalls and adjacent connecting walls.

In another embodiment, a multi-stage energy absorbing system comprises: a base; and an energy absorber comprising elements, wherein the energy absorber elements comprise a pair of outer sidewalls having a narrow section with a narrow section angle and a wide section with a wide section angle, wherein the narrow section and the wide section are connected by a diverging section with a diverging section angle, wherein the diverging section angle is less than 90°; a connecting wall between the outer sidewalls; a pair of inner sidewalls; and an inner connecting wall, wherein the energy absorbing elements are in a nested arrangement creating an open area between adjacent sidewalls and adjacent connecting walls.

In one embodiment, a method of making a multi-stage energy absorbing system comprises: extruding a base and an energy absorber, wherein the energy absorber comprises energy absorbing elements in a nested arrangement, wherein the energy absorbing element comprise pairs of sidewalls and a connecting wall, wherein the sidewalls and the connecting wall of subsequent, adjacent energy absorbing elements are shorter creating a space between adjacent sidewalls and adjacent connecting walls.

In the various embodiments, (i) outer sidewalls have a non-uniform thickness and/or (ii) the multi-stage energy absorbing system comprises a material selected from the group consisting of polycarbonate, polybutylene terephthalate, acrylonitrile-butadiene-styrene; polycarbonate/polybutylene terephthalate blends; polycarbonate/acrylonitrile-butadiene-styrene blends; copolycarbonate-polyesters; acrylic-styrene-acrylonitrile; acrylonitrile-(ethylene-polypropylene diamine modified)-styrene; phenylene ether resins; blends of polyphenylene ether/polyamide; polyamides; phenylene sulfide resins; polyvinyl chloride; high impact polystyrene; low density polyethylene; high density polyethylene; polypropylene; and combinations comprising at least one of the foregoing; and/or (iii) the multi-stage energy absorbing system comprises a blend of polybutylene terephthalate and polycarbonate; and/or (iv) the shape of the sidewalls is selected from the group consisting of straight, curved, parabolic, circular, cubic, brazier, bowed, corrugated, and combinations comprising at least one of the foregoing; and/or (v) the packaging space is less than or equal to 5 millimeters after crushing; and/or (vi) the system absorbs greater than or equal to 60% more energy than a single-stage energy absorber for an equivalent packaging space; and/or (vii) the system absorbs greater than or equal to 70% more energy than a single-stage energy absorber for an equivalent packaging space; and/or (viii) the diverging section angle is less than or equal to 45°; and/or (ix) the sidewalls and/or connecting walls have a thickness that is less than or equal to 1.75 millimeters; and/or (x) the sidewalls and/or connecting walls have a thickness that is less than or equal to 1.5 millimeters.

All ranges disclosed herein are inclusive of the endpoints, and the endpoints are independently combinable with each other (e.g., ranges of "up to 25 wt.%, or, more specifically, 5 wt.% to 20 wt.%", is inclusive of the endpoints and all intermediate values of the ranges of "5 wt.% to 25 wt.%," etc.). "Combination" is inclusive of blends, mixtures, alloys, reaction products, and the like. Furthermore, the terms "first," "second," and the like, herein do not denote any order, quantity, or importance, but rather are used to denote one element from another. The terms "a" and "an" and "the" herein do not denote a limitation of quantity, and are to be construed to cover both the singular and the plural, unless otherwise indicated herein or clearly contradicted by context. The suffix "(s)" as used herein is intended to include both the singular and the plural of the term that it modifies, thereby including one or more of that term (e.g., the film(s) includes one or more films). Reference throughout the specification to "one embodiment", "another embodiment", "an embodiment", and so forth, means that a particular element (e.g., feature, structure, and/or characteristic) described in connection with the embodiment is included in at least one embodiment described herein, and may or may not be present in other embodiments. In addition, it is to be understood that the described elements may be combined in any suitable manner in the various embodiments.

While particular embodiments have been described, alternatives, modifications, variations, improvements, and substantial equivalents that are or may be presently unforeseen may arise to applicants or others skilled in the art. Accordingly, the appended claims as filed and as they may be amended are intended to embrace all such alternatives, modifications variations, improvements, and substantial equivalents.

## Claims

1. A multi-stage energy absorbing system (50, 60), comprising:
a base (12); and
a plurality of energy absorbers (10, 14), wherein each energy absorber (10, 14) individually comprises energy absorbing elements in a nested arrangement,
wherein each of the energy absorbing elements comprises a pair of sidewalls (16, 20, 24) and a connecting wall (18, 22) the sidewalls (16, 20, 24) connecting the base (12) to the connecting wall (18, 22), wherein the sidewalls (16, 20, 24) and the connecting wall (18, 22) of each subsequent, adjacent energy absorbing elements are shorter creating a space (34) between adjacent sidewalls and adjacent connecting walls, **characterized in that** a pair of outer sidewalls (16, 20, 24) has a non-uniform thickness.

2. The multi-stage energy absorbing system (50, 60) of Claim 1, wherein the sidewalls (16, 20, 24) and/or connecting walls (18, 22) have a thickness that is less than or equal to 1.75 millimeters.

3. The multi-stage energy absorbing system (50, 60) of any of Claims 1-2, wherein the sidewalls (16, 20, 24) and/or connecting walls (18, 22) have a thickness that is less than or equal to 1.5 millimeters.

4. The multi-stage energy absorbing system (50, 60) of any of Claims 1-3, comprising a material selected from the group consisting of polycarbonate, polybutylene terephthalate, acrylonitrile-butadiene-styrene; polycarbonate/polybutylene terephthalate blends; polycarbonate/acrylonitrile-butadiene-styrene blends; copolycarbonate-polyesters; acrylic-styrene-acrylonitrile; acrylonitrile-(ethylene-polypropylene diamine modified)-styrene; phenylene ether resins; blends of polyphenylene ether/polyamide; polyamides; phenylene sulfide resins; polyvinyl chloride; high impact polystyrene; low density polyethylene; high density polyethylene; polypropylene; and combinations comprising at least one of the foregoing.

5. The multi-stage energy absorbing system (50, 60) of any of Claims 1-4, comprising a blend of polybutylene terephthalate and polycarbonate.

6. The multi-stage energy absorbing system (50, 60) of any of Claims 1-5, wherein the shape of the sidewalls (16, 20, 24) is selected from the group consisting of straight, curved, parabolic, circular, cubic, brazier, bowed, corrugated, and combinations comprising at least one of the foregoing.

7. The multi-stage energy absorbing system (50, 60) of any of Claims 1-6, wherein a packaging space of the system (16, 20, 24) after crushing is less than or equal to 5 millimeters.

8. The multi-stage energy absorbing system (50, 60) of Claims 1-7, wherein the system (16, 20, 24) absorbs greater than or equal to 60% more energy than a single-stage energy absorber for an equivalent packaging space.

9. The multi-stage energy absorbing system (50, 60) of any of Claims 1-8, wherein the system (50, 60) absorbs greater than or equal to 70% more energy than a single-stage energy absorber for an equivalent packaging space.

10. A method of making a multi-stage energy absorbing system (50, 60), comprising:
extruding a base (12) and a plurality of energy absorbers (10, 14), wherein each energy absorber (10, 14) comprises energy absorbing elements in a nested arrangement, wherein each of the energy absorbing elements comprises a pair of sidewalls (16, 20, 24) and a connecting wall (18, 22), the sidewalls (16, 20, 24) connecting the base (12) to the connecting wall (18, 22), wherein the sidewalls (16, 20, 24) and the connecting wall (18, 22) of each subsequent,
adjacent energy absorbing elements are shorter creating a space between adjacent sidewalls and adjacent connecting walls, **characterized in that** a pair of outer sidewalls (16, 24) has anon-uniform thickness.

11. The method of Claim 10, wherein the shape of the sidewalls (16, 20, 24) is selected from straight, curved, parabolic, circular, cubic, brazier, bowed, corrugated, or a combination comprising at least one of the foregoing.

## Patentansprüche

1. Mehrstufiges Energieabsorptionssystem (50, 60), umfassend:
eine Basis (12); und
mehrere Energieabsorber (10, 14), wobei jeder Energieabsorber (10, 14) einzeln Energieabsorptionselemente in einer eingebetteten Anordnung umfasst, wobei jedes der Energieabsorptionselemente ein Paar von Seitenwänden (16, 20, 24) und eine Verbindungswand (18, 22) umfasst, wobei die Seitenwände (16, 20, 24) die Basis (12) mit der Verbindungswand (18, 22) verbinden, wobei die Seitenwände (16, 20, 24) und die Verbindungswand (18, 22) jedes nachfolgenden, benachbarten Energieabsorptionselements kürzer sind, wobei sie einen Raum (34) zwischen benachbarten Seitenwänden und benachbarten Verbindungswänden bilden,
**dadurch gekennzeichnet, dass** ein Paar von äußeren Seitenwänden (16, 20, 24) eine ungleichmäßige Dicke aufweist.

2. Mehrstufiges Energieabsorptionssystem (50, 60) nach Anspruch 1, wobei die Seitenwände (16, 20, 24) und/oder Verbindungswände (18, 22) eine Dicke aufweisen, die kleiner oder gleich 1,75 Millimeter ist.

3. Mehrstufiges Energieabsorptionssystem (50, 60) nach einem der Ansprüche 1 oder 2, wobei die Seitenwände (16, 20, 24) und/oder Verbindungswände (18, 22) eine Dicke aufweisen, die kleiner oder gleich 1,5 Millimeter ist.

4. Mehrstufiges Energieabsorptionssystem (50, 60) nach einem der Ansprüche 1 bis 3, umfassend ein Material, ausgewählt aus der Gruppe bestehend aus Polycarbonat, Polybutylenterephthalat, Acrylonitril-Butadien-Styrol; Polycarbonat/Polybutylenterephthalat-Mischungen; Polycarbonat/Acrylonitril-Butadien-Styrol-Mischungen; Copolycarbonatpolyestern; Acryl-Styrol-Acrylonitril; Acrylonitril-(Ethylenpolypropylendiamin-modifiziertem)-Styrol;
Phenylenetherharzen; Mischungen von Polyphenylenether/Polyamid; Polyamiden; Phenylensulfidharzen; Polyvinylchlorid; Polystyrol mit hoher Schlagfestigkeit; Polyethylen mit niedriger Dichte; Polyethylen mit hoher Dichte; Polypropylen; und Kombinationen, umfassend mindestens eines der Vorhergehenden.

5. Mehrstufiges Energieabsorptionssystem (50, 60) nach einem der Ansprüche 1 bis 4, umfassend eine Mischung von Polybutylenterephthalat und Polycarbonat.

6. Mehrstufiges Energieabsorptionssystem (50, 60) nach einem der Ansprüche 1 bis 5, wobei die Form der Seitenwände (16, 20, 24) ausgewählt ist aus der Gruppe bestehend aus gerade, gekrümmt, parabolisch, kreisförmig, kubisch, gitterförmig, gebogen, gewellt und Kombinationen, umfassend mindestens eines der Vorhergehenden.

7. Mehrstufiges Energieabsorptionssystem (50, 60) nach einem der Ansprüche 1 bis 6, wobei ein Packungsraum des Systems (16, 20, 24) nach dem Zusammendrücken kleiner oder gleich 5 Millimeter ist.

8. Mehrstufiges Energieabsorptionssystem (50, 60) nach einem der Ansprüche 1 bis 7, wobei das System (16, 20, 24) mehr als oder gleich 60 % mehr Energie absorbiert als ein einstufiger Energieabsorber für einen äquivalenten Packungsraum.

9. Mehrstufiges Energieabsorptionssystem (50, 60) nach einem der Ansprüche 1 bis 8, wobei das System (50, 60) mehr als oder gleich 70 % mehr Energie absorbiert als ein einstufiger Energieabsorber für einen äquivalenten Packungsraum.

10. Verfahren zur Herstellung eines mehrstufigen Energieabsorptionssystems (50, 60), umfassend:
Extrudieren einer Basis (12) und mehrerer Energieabsorber (10, 14), wobei jeder Energieabsorber (10, 14) Energieabsorptionselemente in einer eingebetteten Anordnung umfasst, wobei jedes der Energieabsorptionselemente ein Paar von Seitenwänden (16, 20, 24) und eine Verbindungswand (18, 22) umfasst, wobei die Seitenwände (16, 20, 24) die Basis (12) mit der Verbindungswand (18, 22) verbinden, wobei die Seitenwände (16, 20, 24) und die Verbindungswand (18, 22) jedes nachfolgenden, benachbarten Energieabsorptionselements kürzer sind, wobei sie einen Raum zwischen benachbarten Seitenwänden und benachbarten Verbindungswänden bilden, **dadurch gekennzeichnet, dass** ein Paar von äußeren Seitenwänden (16, 24) eine ungleichmäßige Dicke aufweist.

11. Verfahren nach Anspruch 10, wobei die Form der Seitenwände (16, 20, 24) ausgewählt wird aus der Gruppe bestehend aus gerade, gekrümmt, parabolisch, kreisförmig, kubisch, gitterförmig, gebogen, gewellt oder einer Kombination, umfassend mindestens eines der vorhergehenden.

## Revendications

1. Système d'absorption d'énergie à plusieurs niveaux (50, 60), comprenant :
une base (12) ; et
une pluralité d'absorbeurs d'énergie (10, 14), dans lequel chaque absorbeur d'énergie (10, 14) comprend individuellement des éléments d'absorption d'énergie dans un agencement emboîté, dans lequel chacun des éléments d'absorption d'énergie comprend une paire de parois latérales (16, 20, 24) et une paroi de connexion (18, 22), les parois latérales (16, 20, 24) connectant la base (12) à la paroi de connexion (18, 22), dans lequel les parois latérales (16, 20, 24) et la paroi de connexion (18, 22) de chaque élément d'absorption d'énergie adjacent suivant sont plus courtes créant un espace (34) entre des parois latérales adjacentes et des parois de connexion adjacentes, **caractérisé en ce qu'**une paire de parois latérales externes (16, 20, 24) a une épaisseur non uniforme.

2. Système d'absorption d'énergie à plusieurs niveaux (50, 60) selon la revendication 1, dans lequel les parois latérales (16, 20, 24) et/ou les parois de connexion (18, 22) ont une épaisseur qui est inférieure ou égale à 1,75 millimètre.

3. Système d'absorption d'énergie à plusieurs niveaux (50, 60) selon l'une quelconque des revendications 1 et 2, dans lequel les parois latérales (16, 20, 24) et/ou les parois de connexion (18, 22) ont une épaisseur qui est inférieure ou égale à 1,5 millimètre.

4. Système d'absorption d'énergie à plusieurs niveaux (50, 60) selon l'une quelconque des revendications 1 à 3, comprenant un matériau sélectionné dans le groupe composé de polycarbonate, de téréphtalate de polybutylène, d'acrylonitrile-butadiène-styrène ; de mélanges de polycarbonate/polybutylène téréphtalate ; de mélanges de polycarbonate/acrylonitrile-butadiène-styrène ; de polyesters de copolycarbonate ; d'acrylique-styrène-acrylonitrile ; d'acrylonitrile-(éthylène-polypropylène diamine modifié)-styrène ; de résines d'éther de phénylène ; de mélanges d'éther de polyphénylène/polyamide ; de polyamides ; de résines de sulfure de phénylène ; de chlorure de polyvinyle ; de polystyrène à impact élevé ; de polyéthylène à faible densité ; de polyéthylène à densité élevée ; de polypropylène ; et des combinaisons comprenant au moins un des éléments précédents.

5. Système d'absorption d'énergie à plusieurs niveaux (50, 60) selon l'une quelconque des revendications 1 à 4, comprenant un mélange de téréphtalate de polybutylène et de polycarbonate.

6. Système d'absorption d'énergie à plusieurs niveaux (50, 60) selon l'une quelconque des revendications 1 à 5, dans lequel la forme des parois latérales (16, 20, 24) est sélectionnée dans le groupe composé de droite, courbée, parabolique, circulaire, cubique, brasier, arquée, ondulée et des combinaisons comprenant au moins une des formes précédentes.

7. Système d'absorption d'énergie à plusieurs niveaux (50, 60) selon l'une quelconque des revendications 1 à 6, dans lequel un espace d'emballage du système (16, 20, 24) après écrasement est inférieur ou égal à 5 millimètres.

8. Système d'absorption d'énergie à plusieurs niveaux (50, 60) selon l'une quelconque des revendications 1 à 7, dans lequel le système (16, 20, 24) absorbe plus ou 60 % d'énergie en plus qu'un absorbeur d'énergie à simple niveau pour un espace d'emballage équivalent.

9. Système d'absorption d'énergie à plusieurs niveaux (50, 60) selon l'une quelconque des revendications 1 à 8, dans lequel le système (50, 60) absorbe plus ou 70 % d'énergie en plus qu'un absorbeur d'énergie à simple niveau pour un espace d'emballage équivalent.

10. Procédé de fabrication d'un système d'absorption d'énergie à plusieurs niveaux (50, 60), comprenant :
l'extrusion d'une base (12) et d'une pluralité d'absorbeurs d'énergie (10, 14), dans lequel chaque absorbeur d'énergie (10, 14) comprend des éléments d'absorption d'énergie dans un agencement emboîté, dans lequel chacun des éléments d'absorption d'énergie comprend une paire de parois latérales (16, 20, 24) et une paroi de connexion (18, 22), les parois latérales (16, 20, 24) connectant la base (12) à la paroi de connexion (18, 22),
dans lequel les parois latérales (16, 20, 24) et la paroi de connexion (18, 22) de chaque élément d'absorption d'énergie adjacent suivant sont plus courtes créant un espace entre des parois latérales adjacentes et des parois de connexion adjacentes, **caractérisé en ce qu'**une paire de parois latérales externes (16, 24) a une épaisseur non uniforme.

11. Procédé selon la revendication 10, dans lequel la forme des parois latérales (16, 20, 24) est sélectionnée parmi droite, courbée, parabolique, circulaire, cubique, brasier, arquée, ondulée ou une combinaison comprenant au moins une des formes précédentes.
